# EUROPEAN PATENT APPLICATION

(11) **EP 2 985 662 A1**
(43) Date of publication of application: **17.02.2016**
(21) Application number: 14180526.7
(22) Date of filing: 11.08.2014
(51) Int. Cl.: G05B 19/042, G06F 17/30

(54) **Automatic creation of hardware configuration in a distributed control system**

(71) Applicant: Siemens Aktiengesellschaft, 80333 München (DE)
(72) Inventor: Tiruveedula, Bhaskar Babu, 560029 Bangalore (IN); Komarla Nagaraju, Nagarjuna, 560078 Bangalore (IN); Ramanathan, Rathinakumar, 560068 Bangalore (IN)
(74) Representative: Isarpatent

(57) **Abstract**

The present invention relates to a method and system for automatic generation of hardware configuration in a distributed control environment. In one embodiment, the method includes receiving selection of an engineering object (608B) corresponding to a hardware device in an automation system from a computing device (104A). The method also includes dynamically determining best matching hardware configurations (610A-N) from a plurality of hardware configurations associated with multiple users of a distributed control system (100,500). Furthermore, the method comprises providing a list of the best matching hardware configurations (610A-N) to the computing device (104A) in response to the selection of the engineering object (608B). Moreover, the method comprises displaying visual representation of the best matching hardware configurations (610A-N) according to ranks assigned to the best matching hardware configurations (610A-N) so that a user selects and edits one of the best matching hardware configurations (610A-N) to create a desired hardware configuration (607) .

## Description

The present invention relates to the field of distributed control system, and more particularly relates to automatically creating hardware configurations in the distributed control system.

An automation system, such as industrial automation system in an industrial setting, comprises a plurality of hardware devices such as programmable logic controllers (PLCs), sensors, field devices, interface modules, Input/Output (I/O) links, network switches, communication processors, etc. The hardware devices are responsible for overall operation of the industrial setting. To ensure proper functioning of the industrial setting, a hardware configuration is generated and loaded on a main PLC which is responsible for monitoring and controlling functions of other hardware devices of the industrial automation system. The hardware configuration is a graphical representation of a layout of hardware devices of the industrial automation system.

Hardware configurations are typically created using an engineering system provided on a computing device. The engineering system provides an engineering graphical user interface (GUI) editor which facilitates a user to create hardware configurations. In the engineering GUI editor, an industrial automation project is created followed by creation of a rack. Thereafter, engineering objects corresponding to hardware devices are added in the rack from an engineering object database and connections are established between the engineering objects to form a desired hardware configuration. For example, connections established between the engineering objects may include multi-point interface connection, Profibus decentral peripheral connection, ProfiNET connection, Actuator sensor interface connection, Profibus process automation connection, point-to-point connection, etc. Thereafter, parameters are set for each of the engineering objects corresponding to the hardware devices. For example, the user drags and drops required engineering objects from an engineering object database and establishes appropriate connections between unused ports of each engineering object with unused ports of another engineering object in the rack using the engineering GUI editor. Then, appropriate parameters are set for each of the engineering objects for generating a desired hardware configuration. Finally, the hardware configuration is compiled in a desired format so that the compiled hardware configuration can be downloaded to a programmable logic controller in the industrial setting.

A distributed control system is a setup in which a plurality of computing devices are coupled to a server via a network. In the distributed control system, user of respective computing devices accesses the server to create desired hardware configurations. For example, the user of each computing device may access an engineering system that enables to create desired hardware configurations by accessing the server. Accordingly, one or more instances of the engineering system are displayed on said of the computing devices. Each instance displays an engineering GUI editor which enables the respective user to create desired hardware configuration. Currently, the engineering system does not provide access to hardware configurations that are created or being created by other users of the engineering system. Due to this, a user has to create a new hardware configuration afresh when a similar hardware configuration was previously created or being created by the same user using different instances or other users of the engineering system. Currently, if user has to re-use an existing hardware configuration, the user has to search hardware configuration database based on project name, unique identifier, etc. This is cumbersome and time consuming activity. Thus, the user do not have easy access to the existing hardware configurations.

In light of the foregoing, there is a need for providing easy access to existing hardware configurations in a distributed control system so that the existing hardware configurations can be reused.

Therefore, it is the object of the present invention to provide a distributed control system which facilitates dynamic creation of hardware configurations through automatic recommendation of best matching hardware configurations among the existing hardware configurations associated with multiple users for reuse.

The object of the present invention is achieved by a distributed control system comprises a server such as a cloud computing server and a plurality of computing devices such a laptop, desktop, tablet computer, smartphone and the like. The plurality of computing devices are communicatively coupled to the server via a network. The computing devices access the server to enable users to create a desired hardware configuration. During creation of the hardware configurations, the server dynamically identifies and provides best matching hardware configurations associated with the multiple users of the distributed control system to each of the computing devices based on the hardware configuration being created on the respective computing devices. Accordingly, each of the computing devices displays visual representation of the respective best matching hardware configurations so that the desired hardware configuration is generated using any of the best matching hardware configurations. A desired hardware configuration is a hardware configuration which a user wish to create using the computing device. The hardware configuration is a graphical layout of hardware devices in an automation system. The hardware devices may include programmable logic controllers, Input/Output (I/O) links, network switches, islaves and the like. The automation system may be an industrial automation system, a building automation system, a home automation system, and the like.

The object of the present invention is also acheived by a method of dynamically creating hardware configurations in the distributed control system. According to the present invention, the method comprises receiving, by the server, selection of an engineering object for use in a hardware configuration being created from a computing device in the distributed control system. The engineering object is a graphical user interface (GUI) object which corresponds to a hardware device in an automation system. For example, a user uses engineering objects stored in an engineering object database to create a desired hardware configuration. When the user adds an engineering object to a hardware configuration being created in an instance of engineering GUI editor displayed on the computing device, selection of the engineering object for use in the hardware configuration being created is detected by the server.

Furthermore, the method comprises dynamically determining one or more hardware configurations which best matches the hardware configuration being created from a plurality of hardware configurations in a hardware configuration database. The hardware configuration database comprises the plurality of hardware configurations which are created or being created by mulitple users of the distributed control system. The best matching hardware configurations are dynamically determined upon receiving selection of the engineering object. Thus, each time an engineering object is selected, one or more hardware configurations best matching the hardware configuration being created are identified. In determining the best matching hardware configurations, the method comprises comparing the hardware configuration being created with the plurality of hardware configurations in the hardware configuration database, and identifying one or more hardware configurations which best matches the hardware configuration being created from the plurality of hardware configurations based on the outcome of comparison. Thus, one or more best matching hardware configurations created by different users are recommended for reuse to the user of the computing device.

Then, the method comprises generating the hardware configuration based on the one or more best matching hardware configurations. Advantageously, the desired hardware configuration is generated using one of the best matching configurations, thereby saving time and efforts to manually create the desired hardware configuration.

Additionally, the method comprises displaying visual representation of the best matching hardware configurations in the instance of engineering GUI editor. The visual representation is an thumbnail image of the best matching hardware configurations. For example, the visual representation may provide a compressed view of the respective best matching hardware configurations. Thus, the visual representation facilitates the user to view and select the best matching hardware configuration for reuse. In some embodiments, the method comprises displaying visual representation of the best matching hardware configurations in the intance of engineering GUI editor according to ranks associated with the best matching hardware configurations. Each of the hardware configuration is assigned a rank based on usage of said each hardware configuration. Thus, visual representation of the best matching hardware configurations can be displayed in the order of their ranks. Advantageously, best ranked hardware configuration can be selected for reuse among the best matching hardware configurations.

Accordingly, the method comprises receiving selection of one of the best matching hardware configurations using the visual representation of the best matching hardware configurations. For example, a user may drag and drop the visual representation of the best matching hardware configuration that he/she wishes to reuse. The drag and drop operation triggers selection of the best matching hardware configuration. Then, the method comprises obtaining the selected best matching hardware configuration from the hardware configuration database, and displaying the selected best matching hardware configuration in the instance of engineering GUI editor displayed on the computing device. An intance of engineering GUI editor provides an inteface for the user to create a desired hardware configuration on the computing device. When the user selects the best matching hardware configuration, the best matching hardware configuration is displayed in the instance of the engineering GUI editor. Advantageously, the user can view and/or edit the best matching hardware configuration as desired.

Therein, the method comprises generating the hardware configuration by editing the displayed best matching hardware configuration using the instance of engineering GUI editor. Then, the user may compile the generated hardware configuration for downloading onto a main programmable logic controller. Also, the instance of engineering GUI editor automatically stores the generated hardware configuration in the hardware configuration database.

Additionally, the method comprises updating the rank associated with the selected best matching hardware configuration in a rank database. For example, the rank associated with the best matching hardware configuration is incremented if the users use the best matching hardware configurations. Accordingly, the rank information is updated in the rank database. Advantageously, The updated rank information helps in displaying the best matching hardware configurations in the instance of engineering GUI editor according to their ranks.

Also, the method comprises bookmarking the selected best matching hardware configuration. The user may bookmark the selected best matching hardware configuration using a bookmark option. Thus, bookmarked hardware configurations are displayed in the instance of engineering GUI editor. Advantageously, the user can easily retrieve the best matching hardware configuration in future from the bookmarked hardware configurations.

Alternatively, the method comprises identifying one or more hardware configurations from the plurality of hardware configurations based on pre-defined criteria. For example, one or more hardware configurations are identified based on rank, randomness, frequency of usage, preference, history and the like. Then, the method comprises generating the hardware configuration based on the one or more hardware configurations. Thus, the one or more hardware configurations are intelligently recommended to the user before selection of any engineering object for use in the hardware configuration. Advantageously, time and effort for selecting the engineering object and determining best matching hardware configurations is saved.

The object of the present invention is also achieved by a server of a distributed control system. The server comprises a processor, and a memory coupled to the processor. The memory comprises an engineering system provided with a hardware configuration module. The hardware configuration module is capable of receiving selection of an engineering object for use in a hardware configuration being created from a computing device in the distributed control system. The selected engineering object corresponds to a hardware device in an automation system.

The hardware configuration module comprises dynamically determining one or more hardware configurations which best match the hardware configuration being created from a plurality of hardware configurations in a hardware configuration database. The plurality of hardware configurations are associated with mulitple users of the distributed control system. The hardware configuration module is further capable of generating the hardware configuration based on the one or more best matching hardware configurations.

Therein, the hardware configuration module is also capable of displaying visual representation of the best matching hardware configurations.

Therein, the hardware configuration module is capable of receiving selection of one of the best matching hardware configurations using the visual representation of the best matching hardware configurations. Furthermore, the hardware configuration module is capable of obtaining the selected best matching hardware configuration from the hardware configuration database. Moreover, the hardware configuration module is capable of displaying the selected best matching hardware configuration in an instance of engineering GUI editor displayed on the computing device.

Therein, the hardware configuration module is capable of generating the hardware configuration by editing the displayed best matching hardware configuration using the instance of engineering GUI editor.

Therein, the hardware configuration module is capable of updating a rank associated with the selected best matching hardware configuration in a rank database.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an exemplary distributed control system according to one embodiment of the present invention;
- FIG 2: illustrates a block diagram of a server shown in FIG 1 according an embodiment of the present invention;
- FIG 3: illustrates a block diagram of a hardware configuration module of FIG 1 according to an embodiment of the present invention;
- FIG 4: is a process flowchart illustrating an exemplary method of automatically creating hardware configurations according to an embodiment of the present invention;
- FIG 5: illustrates a block diagram of a distributed control system according to another embodiment of the present invention; and
- FIGs 6A-6D: are screenshot views of an instance of engineering GUI editor illustrating a process of creating hardware configuration according to an embodiment of the present invention.
- FIGs 7A-7B: are screenshot views of the instance of engineering GUI editor illustrating the process of creating hardware configuration according to another embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

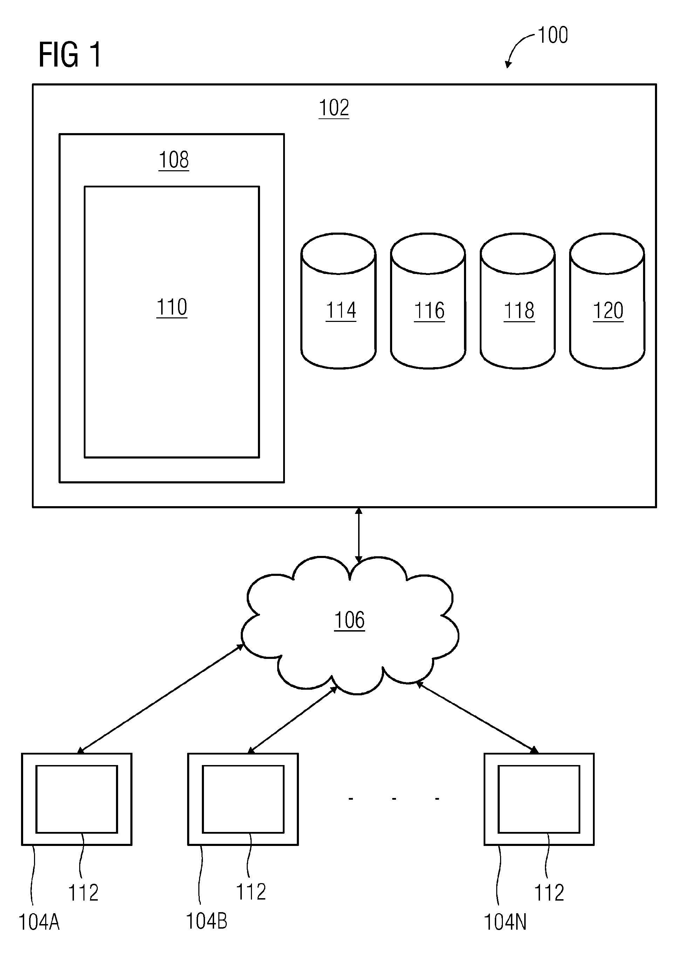

FIG 1 illustrates a block diagram of an exemplary distributed control system 100 according to one embodiment of the present invention. The distributed control system 100 comprises a server 102, computing devices 104A-N, and a network 106.

Each of the computing devices 104A-N is connected to the server 102 via the network 106. The server 102 may be cloud computing server. The server 102 comprises an engineering system 108 with a hardware configuration module 110, an engineering object database 114, a hardware configuration database 116, a rank database 118, and a bookmark database 120. The engineering system 108 may be stored in the form of machine-readable instructions executable by the server 102. The hardware configuration module 110 enables generation of hardware configurations on each of the computing devices 104A-N. In an exemplary implementation, the hardware configuration module 110 is capable of providing one or more instances of engineering GUI editor on each of the computing devices 104AN. Each instance of the engineering graphical user interface (GUI) editor enables respective user of the computing devices 104A-N to create a desired hardware configuration. The hardware configuration is a graphical representation of hardware devices deployed in an industrial automation system of an industrial setting such as a manufacturing plant. The hardware devices in the industrial automation system may includes programmable logic controllers (PLC), communication processor (CP), field devices such as sensors, interface modules, Input/Output (I/O) modules, network switches and the like. The hardware configuration may also contain parameter values associated with the hardware devices in the industrial automation system.

The engineering object database 114 contains engineering objects corresponding to the hardware devices in the industrial automation system. The engineering objects are GUI objects representing such hardware devices. The hardware configuration database 116 stores hardware configurations created by mulitple users of the distributed control system through mulitple instances of engineering GUI editor. The hardware configurations created by the multiple users are completed hardware configurations or hardware configurations which are in progress. Each hardware configuration may comprise a plurality of engineering objects representing a set of hardware devices of an industrial automation system and connection objects representing connections between the plurality of engineering objects. For example, if a production unit has a programmable logic controller (PLC) and several input/output (I/O) modules connected to the PLC via a network switch. The hardware configuration may include engineering objects representing the PLC, the network switch and the I/O modules, and connection objects representing connections between the PLC, the network switch and the I/O modules. The connections objects may be connected to the engineering objects based on type of protocol supported such as PROFIBUS, PROFINET, etc. The hardware configuration database 116 also stores parameter values for each of the engineering objects. The parameter values may correspond to parameters associated with corresponding hardware device of the industrial automation system. It can be noted that, the hardware configuration database 116 maintains hardware configurations created using the computing devices 104A-N so that the hardware configurations can be reused by any user of the distributed control system 100.

The rank database 118 stores rank information associated with each of the hardware configurations stored in the hardware configuration database 116. The rank information indicates rank associated with each hardware configuration. In one embodiment, the rank is assigned to each of the hardware configurations based on usage of the hardware configurations across the distributed control environment. In another embodiment, the rank is assigned to each of hardware configurations based on usage of the hardware configurations by a specific user or on a specific computing device. For example, if a hardware configuration is used most number of times by the user of the computing device 104A, it is ranked highest among the other hardware configurations which are used less number of times by the same user. However, it can be noted that rank can be assigned to said each hardware configuration based on any other criteria. The bookmark database 120 stores bookmark information associated with the hardware configurations in the hardware configuration database 116. The bookmark information stores unique identifier associated with bookmarked hardware configurations. The bookmark information enables users to easily access and retrieve bookmarked hardware configurations in future.

The computing devices 104A-N may be a tablet computer, a desktop, a laptop, a smart phone and the like devices. Each of the computing devices 104A-N comprises a display unit 112. In an exemplary implementation, the display unit 112 may be a touch sensitive display unit. For example, the display unit 112 of the respective computing devices 104A-N may display one or more instance of the engineering GUI editor. Additionally, each of the computing devices 104A-N may comprise an input module such as keyboard and mouse for providing input instructions, a processor for executing input instructions from a user, and a communication module for communicating with the server 102 via the network 106. The network 106 may be Local Area Network, Wide Area Network, Wireless Local Area Network, and the like.

According to the present invention, the server 102 is capable of providing access to the engineering system 108 to each of the computing devices 104A-N. When a user of the respective computing devices 104A-N wishes to create a hardware configuration for a set of hardware devices of an industrial automation system in an industrial setting, the respective computing devices 104A-N send a request to access the engineering system 108 to the server 102 via the network 106. For example, when a user of the respective computing devices 104A-N clicks on an engineering system icon, the respective computing devices 104A-N generates and sends a request message to the server 102 via the network 106.

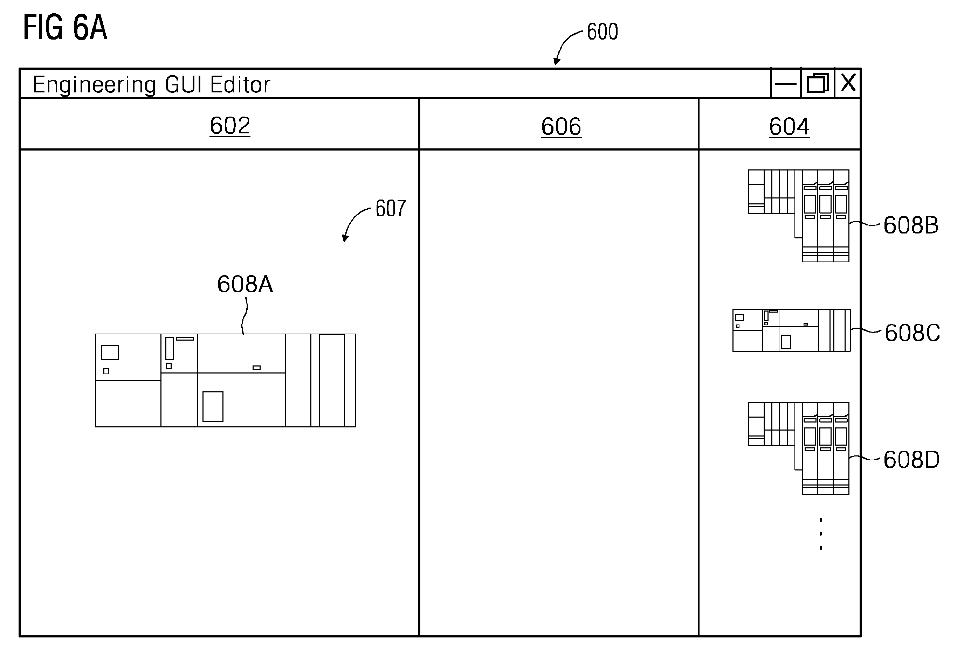

The server 102 processes the requests received from one or more computing devices 104A-N and displays an instance of engineering GUI editor on the display unit 112 of the respective computing devices 104A-N. Each time a request is received from a computing device (e.g., the computing device 104A), the server 102 loads a single instance of engineering GUI editor on the computing device 104A. Thus, the server 102 may provide access to multiple instances of engineering GUI editor based on number of requests received from the computing device 104A. Each instance of engineering GUI editor enables the user of the computing device 104A to create a desired hardware configuration. Also, each instance of engineering GUI editor may provide access to the engineering object database 114 which contains engineering objects corresponding to hardware devices that form the industrial automation system. Each engineering object is a graphical representation of hardware devices of the industrial automation system. In an exemplary implementation, each instance of engineering GUI editor may comprises an engineering editor window, an engineering object database window, a suggested configuration window. The engineering editor window is capable of displaying hardware configuration being created comprising engineering objects, and connection objects connecting the engineering objects. The engineering editor window is also capable of displaying parameter fields containing parameter values associated with each engineering object. The engineering object database window displays the engineering objects stored in the engineering object database 114. The suggested configuration window displays visual representation of hardware configurations stoted in the hardware configuration database 116 which best matches the hardware configuration being created. An exemplary instance of engineering GUI editor is illustrated in FIG 6A.

In an exemplary operation, the user of computing device 104A selects an engineering object corresponding to a hardware device for use in a hardware configuration being created from the engineering object database window. For example, the user may drag and drop the engineering object corresponding to a specific type of programmable logic controller (PLC) from the engineering object database window into the engineering editor window. Accordingly, the hardware configuration module 110 creates an instance of the engineering object in the engineering editor window which displays the hardware configuration being created. The hardware configuration module 110 identifies one or more hardware configurations which best matches the hardware configuration being created from a plurality of hardware configurations stored in the hardware configuration database 116 upon selection of the engineering object. The plurality of hardware configurations are hardware configurations created by multiple users of the computing devices 104A-N. In an exemplary implementation, the hardware configuration module 110 matches the hardware configuration being created with each of the plurality of hardware configurations. In other words, the hardware configuration module 110 matches the engineering object(s) in the hardware configuration being created with the engineering objects in said each hardware configuration in the hardware configuration database 116. If the match is found, the hardware configuration module 110 identifies one or more hardware configurations as best matching hardware configurations. The hardware configuration module 110 also determines rank assigned to the best matching hardware configurations from the rank database 118.

Thereafter, the server 102 provides the list of best matching hardware configurations along with rank information to the computing device 104A via the network 106. Accordingly, the computing device 104A displays visual representation of the best matching hardware configurations in the suggested configuration window. In some embodiments, the computing device 104A displays the visual representation of the best matching hardware configurations according to the rank assigned to the best matching hardware configurations. For example, visual representation of best matching hardware configuration with a highest rank among the best matching hardware configurations is displayed on the top while visual representation of best matching hardware configuration with a lowest rank is displayed at the bottom. The visual representation may be a thumbnail image of best matching hardware configurations. It can be noted that, the hardware configuration module 110 may generate and provide thumbnail images of the best matching hardware configurations along with the list of best matching hardware configurations to the computing device 104A.

In case the user wishes to reuse any of the best matching hardware configurations, the user selects one of the best matching hardware configurations in the suggested configuration window by clicking on the associated visual representation. When the user selects the best matching hardware configuration, the computing device 104A sends a request for the best matching hardware configuration to the server 102 via the network 106. Accordingly, the hardware configuration module 110 obtains the selected best matching hardware configuration from the hardware configuration database 116. Also, the hardware configuration module 110 increments rank associated with the selected best matching hardware configuration and updates rank information in the rank database 118 based on the incremented rank. The server 102 sends a hardware configuration file containing the best matching hardware configuration to the computing device 104A via the network 106. Accordingly, the computing device 104A processes the hardware configuration file and displays the selected best matching hardware configuration in the engineering editor window. The user can realise the above steps through drag and drop operation. In some embodiment, the user may wish to bookmark the displayed best matching hardware configuration. In such case, the hardware configuration module 110 enables the user to bookmark the displayed best matching hardware configuration using a bookmark icon in the instance of engineering GUI editor. When the user clicks on the bookmark icon to bookmark the selected best matching hardware configuration, the computing device 104A sends a bookmark request to the server 102. The hardware configuration module 110 stores bookmark information in a bookmark database 120. When the user opens any instance of engineering GUI editor, the hardware configuration module 110 provides the bookmark information to a computing device on which the user has logged on so that the computing device displays the bookmarked hardware configuration in the instance of engineering GUI editor.

The user may edit the best matching hardware configuration displayed in the engineering editor window to generate a desired hardware configuration. For example, the user may remove or add engineering objects, alter connections between the engineering objects, edit parameter values to create the desired hardware configuration. In case any changes are made to the displayed best matching hardware configuration, the edited hardware configuration is communicated to the server 102. The hardware configuration module 110 stores the edited hardware configuration in the hardware configuration database 116. Also, the hardware configuration module 110 assigns a rank to the edited hardware configuration and updates rank information in the rank database 118 based on the assigned rank. Furthermore, the user can bookmark the edited hardware configuration for future use using a bookmark icon provided in the instance of engineering GUI editor. In this manner, the user can reuse the hardware configurations created by the multiple users of the distributed control system 100 in real time. This is possible since the user has access to all the hardware configurations created by multiple users using mulitple instances across the distributed control system 100. Thus, time and effort required to create a new hardware configuration afresh is saved.

In case the user does not like the best matching hardware configurations displayed on the computing device 104A upon selecting the engineering object, the user may select another engineering object from the engineering object database window. Accordingly, the server 102 sends a new list of best matching hardware configurations to the computing device 104A based on the selection of said another engineering object. The computing device 104A dynamically displays visual representation of the best matching hardware configuration in the list of best matching hardware configurations in the suggested configuration window. Thus, each time a new engineering object is selected, visual representation of best matching hardware configurations is dynamically changed. This is because, the server 102 dynamically updates the list of best matching hardware configuration each time a new engineering object is added to the engineering editor window. This is also applicable when the existing engineering object is removed or deleted from the engineering editor window. The user may perform addition of engineering objects from the engineering object database window to the engineering editor window till visual representation of desired best matching hardware configuration is displayed in the suggested configuration window. The user may compile the edited hardware configuration for downloading on a main PLC in the industrial setting using compile option provided in the instance of engineering GUI editor.

In an alternate embodiment, the hardware configuration module 110 provides a list of hardware configurations comprising one or more hardware configurations associated with the multiple users in the suggested configuration window prior to addition of an engineering object in the engineering editor window from the engineering object database window. Accordingly, the computing devices 104A-N display visual representation of respective hardware configurations based on the list of hardware configurations for reuse. In an exemplary implementation, the hardware configurations are selected from the plurality of hardware configurations associated with the multiple users based on ranking of the hardware configurations. For example, the hardware configurations which are best ranked are selected from the plurality of hardware configurations. As mentioned earlier, rank associated with each hardware configuration is indicative of usage of the hardware configuration by a specific user or the multiple users of the distributed control system. In another exemplary implementation, the hardware configurations are selected from the plurality of hardware configuration is selected based other criteria. For example, a hardware configuration which is frequently used by the user is selected from the plurality of hardware configurations. Alternatively, a hardware configuration is randomly selected from the plurality of hardware configurations.

It can be noted that, the server 102 is capable of simultaneously serving the computing devices 104A-N. For example, the server 102 can recognize selection of engineering object in each instance of engineering GUI editor displayed at the computing devices 104A-N and simultaneously provide appropriate list of best matching hardware configurations to the respective computing devices 104A-N for reuse.

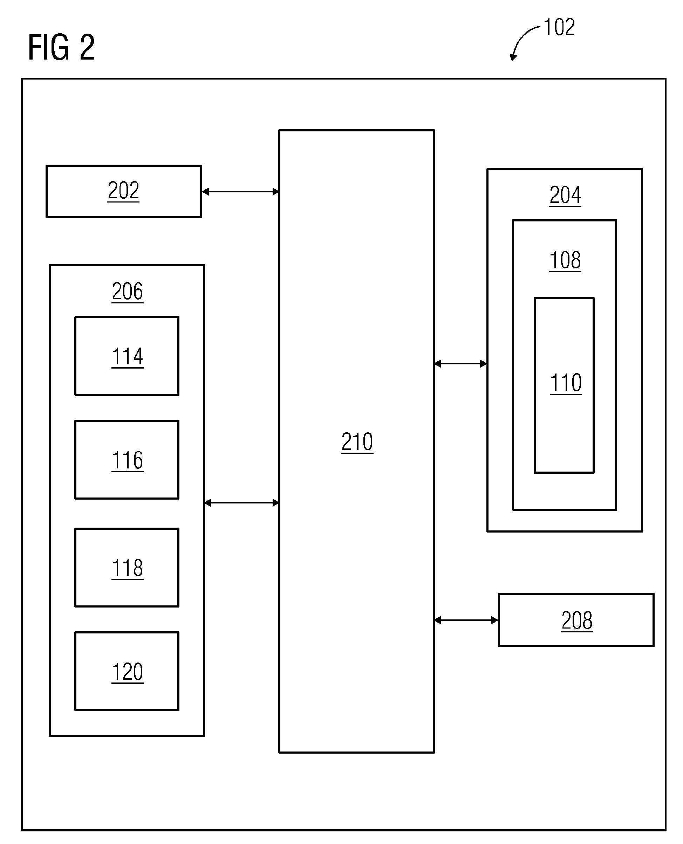

FIG 2 illustrates a block diagram of the server 102 shown in FIG 1 according an embodiment of the present invention. The server 102 may be a personal computer, a laptop computer, a server computer, a tablet and the like. In FIG 2, the server 102 comprises a processor 202, a memory 204, a storage unit 206, a network interface 208, and a bus 210.

The processor 202, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 202 may also include embedded controllers, such as generic or programmable logic devices or arrays, application specific integrated circuits, single-chip computers, and the like.

The memory 204 may be volatile memory and non-volatile memory. A variety of computer-readable storage media may be stored in and accessed from the memory 204. The memory 204 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. As depicted, the memory 204 comprises the engineering system 108 stored in the form of machine-readable instruction on any of the above-mentioned storage media and may be executed by the processor 202. The engineering system 108 comprises the hardware configuration module 110.

For example, when executed by the processor 202, the hardware configuration module 110, cause the processor 202, to provide access to one or more instances of engineering GUI editor to the users of the computing devices 104A-N. Furthermore, the hardware configuration module 110 causes the processor 202 to facilitate users to create hardware configurations as desired using the engineering GUI editor. In an exemplary implementation, when a user of a computing device (e.g., the computing device 104A) selects an engineering object for creating a desired hardware configuration, the hardware configuration module 110 causes the processor 202 to automatically determine one or more best matching configurations from the hardware configuration database 116 based on the selection of engineering object. Then, the hardware configuration module 110 causes the processor 202 to communicate a list of best matching hardware configurations to the computing device 104A so that the computing device 104A displays visual representation of the best matching hardware configurations based on associated rank.

When a user selects one of the best matching hardware configurations for reuse from the displayed visual representations, the hardware configuration module 110 causes the processor 202 to obtain a best matching hardware configuration from the hardware configuration database 116 and send the best matching configuration to the computing device 104A. Accordingly, the computing device 104A displays the best matching hardware configuration in the instance of engineering GUI editor. The user may edit the displayed best matching hardware configuration to create a desired hardware configuration. The hardware configuration module 110 also causes the processor 202 to rank the displayed best matching configuration. Additionally, the hardware configuration module 110 causes the processor 202 to assign a rank to the edited hardware configuration and store the edited hardware configuration in the hardware configuration database 116. The hardware configuration module 110 causes the processor 202 to enable the user to bookmark the hardware configuration for easy retrieval in future.

The storage unit 206 may be a non-transitory storage medium which stores the engineering object database 114, the hardware configuration database 116, the rank database 118, and the bookmark database 120. Alternatively, the databases 114 to 120 can be stored on a separate database server. The network interface 208 enables communication with the computing devices 104A-N via the network 106. The bus 210 acts as interconnect between the processor 202, the memory 204, the storage unit 206 and the network interface 208.

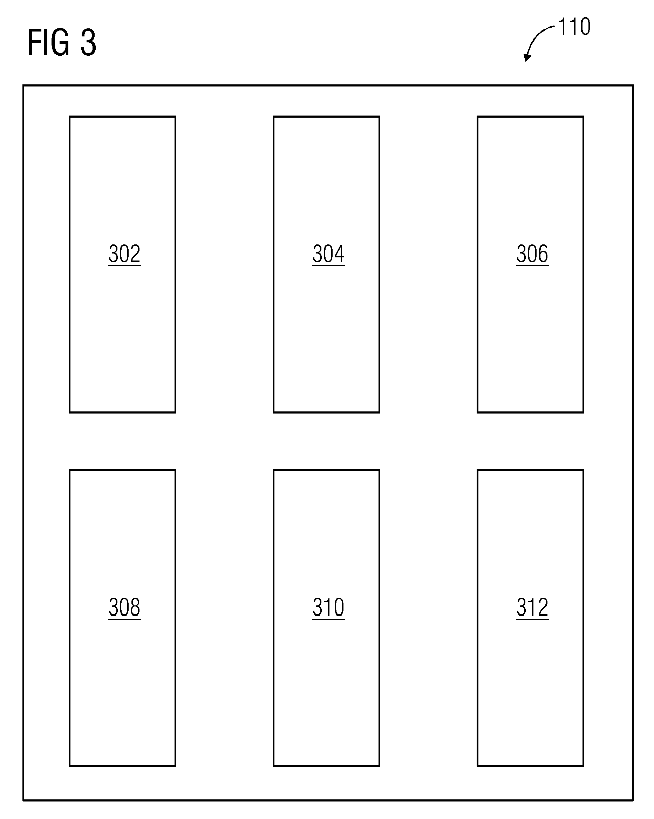

FIG 3 illustrates a block digram of the hardware configuration module 110 of FIG 1 according to an embodiment of the present invention. The hardware configuration module 110 comprises a selection determination module 302, a best matching hardware configuration determination module 304, a best matching hardware configuration display module 306, an edit module 308, a ranking module 310, and a bookmark module 312.

The selection determination module 302 receives selection of an engineering object from respective computing devices 104AN. For example, when a user adds an engineering object from an engineering object database window into an engineering editor window, the selection determination module 302 determines that the engineering object is selected by the user.

The best matching hardware configuration determination module 304 identifies hardware configurations from the hardware configuration database 116 which best matches with the hardware configuration currently being created by the user. For example, the best matching hardware configuration determination module 304 determines whether the engineering objects in the hardware configuration being created partially or completely matches with the hardware configurations in the hardware configuration database 116. The matching hardware configurations are identified as best matching hardware configurations. The identified hardware configurations are created by users of the distributed control system 100. Thus, the hardware configurations corresponding to different users are made available for reuse by any user of the distributed control system.

The best matching hardware configuration display module 306 displays visual representation of the best matching hardware configuration in the associated instance of engineering GUI editor. For example, the best matching hardware configuration display module 306 displays visual representation of the best matching hardware configuration in a sugested hardware configuration window. In some embodiments, the best matching hardware configuration display module 306 displays visual representation of the best matching hardware configurations on the associated computing devices 104A-N according to rank assigned to the best matching hardware configurations. Thus, the users can select the best ranked hardware configuration among the best matching hardware configurations to create a desired hardware configuration. Based on the selection, the best matching hardware configuration display module 306 displays the selected hardware configuration in an engineering editor window of the associated computing devices 104A-N.

The edit module 308 enables the users to edit the selected hardware configuration to create desired hardware configuration. For example, the edit module 308 may enable the users to add an engineering object(s) or remove an engineering object(s) from the selected hardware configuration. Also, the edit module 308 may enable the users to create new connection objects or alter existing connection objects in the selected hardware configuration.

The ranking module 310 ranks hardware configurations stored in the hardware configuration database 116. For example, when a best matching hardware configuration is selected, the ranking module 310 increments the rank of the selected hardware configuration. Similarly, when the selected hardware configuration is edited and stored in the hardware configuration database 116, the ranking module 310 assigns a rank to the edited hardware configuration. The ranking module 310 increments the rank of the hardware configuration based on usage by specific user. Alternatively, the ranking module 310 increments the rank of the hardware configuration based on usage by any user in the distributed control system 100.

The bookmark module 312 creates bookmarks for hardware configurations based on bookmark request received from the computing devices 104A-N. The bookmark module 312 also displays the bookmarked hardware configurations in the associated instance of engineering GUI editor for easy retrieval and use by the respective users.

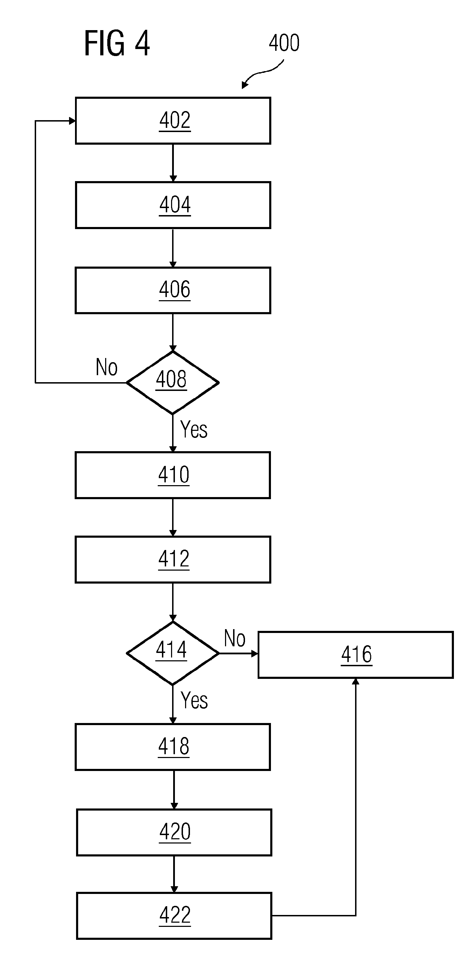

FIG 4 is a process flowchart 400 illustrating an exemplary method of automatically creating hardware configurations according to an embodiment of the present invention. At step 402, selection of an engineering object is received from a computing device. For example, selection of the engineering object is determined when a user of the computing device drags and drops the engineering object from an engineering object database window to an engineering editor window.

At step 404, a best matching hardware configurations are dynamically determined from a plurality of hardware configurations created by multiple users of a distributed control system upon selection of the engineering object. For example, hardware configuration currently being created in the engineering editor window is matched with the hardware configurations in the hardware configuration database. Specifically, it is dynamically determined whether any of the stored hardware configurations comprises at least the engineering objects in the hardware configuration currently being created on the computing device. If any hardware configuration(s) comprises at least the engineering objects in the hardware configuration currently being created, the hardware configurations are identified as best matching hardware configurations.

At step 406, visual representation of the best matching hardware configuration is displayed based on rank associated with the best matching hardware configuration. For example, each hardware configuration stored in the hardware configuration database is assigned a rank based on usage. In an exemplary implementation, visual representation of best matching hardware configuration with a highest rank is displayed at the top in a suggested configuration window while visual representation of best matching hardware configuration with lowest rank is displayed at the bottom. This facilitates the user in selecting the best ranked hardware configuration among the best matching hardware configurations.

At step 408, it is determined whether any of the best matching hardware configurations is selected for reuse by the user. If the user drags and drops visual representation of the best matching hardware configuration from the suggested configuration window into the engineering editor window, it is determined that the best matching hardware configuration is selected. If any of the best matching hardware configuration is not selected, then it implies that the user do not wish to reuse any of the displayed best matching hardware configurations. In such case, the user would continue to create the hardware configuration by adding another engineering object from the engineering object database window. As soon as the user adds a new engineering object into the engineering editor window, steps 402 to 408 are repeated. Accordingly, visual representation of new set of best matching hardware configuration is dynamically updated at step 406 and step 408 is performed.

If, at step 406, the user selects any of the best matching hardware configuration for reuse, the selected best matching hardware configuration is retrieved from the hardware configuration database and displayed in the engineering editor window, at step 410. At step 412, rank associated with the displayed best matching hardware configuration is incremented. For example, the rank associated with the displayed best matching hardware configuration is incremented by value 1 since the best matching hardware configuration is selected by the user for reuse.

At step 414, it is determined whether the user wish to edit the displayed best matching hardware configuration. For example, the user may click edit button in the engineering GUI editor to edit the best matching hardware configuration. Accordingly, it is determined that the user wish to edit the displayed best matching hardware configuration. If the user do not wish to edit the displayed best matching hardware configuration, then at step 416, the best matching hardware configuration is compiled in a specific format.

If the user wish to edit the displayed best matching hardware configuration, then at step 418, the best matching hardware configuration is edited based on user inputs. For example, the user may add or delete engineering objects in the best matching hardware configuration to create desired hardware configuration. Once the desired hardware configuration is created, at step 420, the desired hardware configuration is stored in the hardware configuration database. At step 422, a rank is assigned to the desired hardware configuration. Accordingly, the rank information is updated in a rank database. Optionally, the step 416 is performed in which the desired hardware configuration is compiled. In this manner, desired hardware configuration is automatically created by resuing existing hardware configurations created by multiple users of distributed control system. Advantageously, time and effort required to create desired hardware configuration afresh is saved.

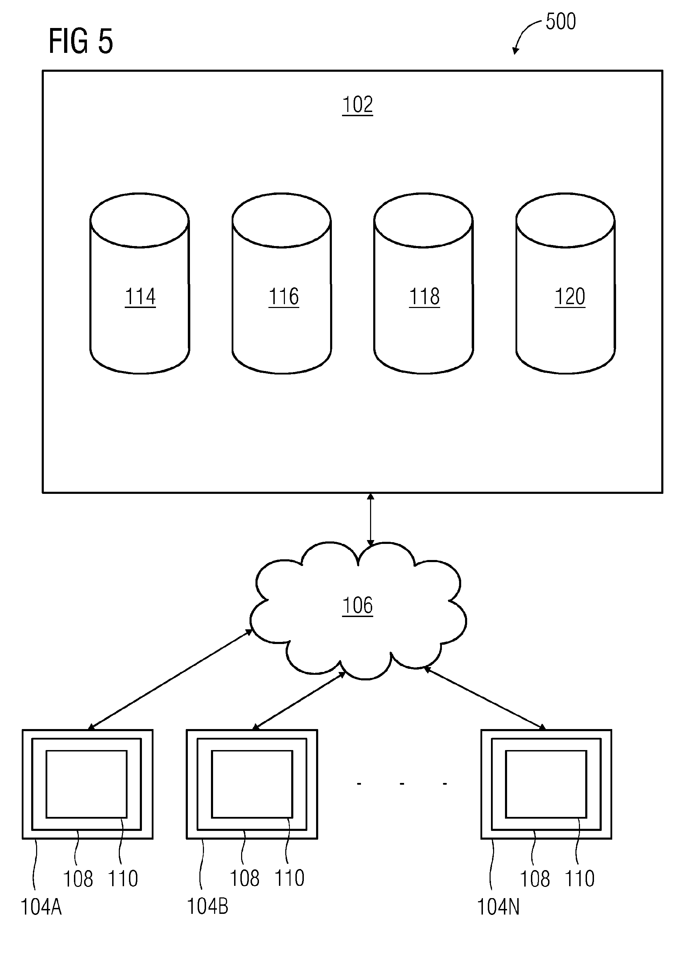

FIG 5 illustrates a block diagram of a distributed control system 500 according to another embodiment of the present invention. The distributed control system 500 of FIG 5 is similar to the distributed control system 100 of FIG 1 except that the engineering system 108 comprising the hardware configuration module 110 resides in each of the computing devices 104A-N instead of the server 102. In the distributed control system 500, the hardware configuration module 110 residing in the respective computing devices 104A-N accesses the engineering object database 114, the hardware configuration database 116, the rank database 118, and the bookmark database 120 in the server 102 when respective users wish to create desired hardware configuration using the engineering system 108.

FIGs 6A-6D are screenshot views of an instance of engineering GUI editor 600 illustrating a process of creating hardware configuration according to an embodiment of the present invention. FIG 6A illustrates a screenshot view of the instance of engineering GUI editor 600. The instance of the engineering GUI editor 600 is displayed on respective computing devices 104A-N when a request to access the engineering system 108 is received. The instance of engineering GUI editor 600 comprises an engineering editor window 602, an engineering object database window 604, and a suggested configuration window 606. The engineering editor window 602 enables a user to create a desired hardware configuration 607 using engineering objects displayed in the engineering object database window 604. The engineering object database window 604 displays engineering objects corresponding to hardware devices in an industrial automation system. The suggested configuration window 606 displays hardware configurations, associated with multiple users of the distributed control system, which best matches hardware configuration being created in the instance of engineering GUI editor 600. The displayed hardware configurations can be used for creating the desired hardware configuration 607.

To create the desired hardware configuration 607, a user may add engineering objects corresponding to different hardware devices from the engineering object database window 604. As shown in FIG 6A, the user has added an engineering object 608A corresponding to a programmable logic controller from the engineering object database window 604 to the engineering editor window 602. For example, the user performs drag and drop operation to add the engineering object 608A corresponding to the programmable logic controller from the engineering object database window 604 into the engineering editor window 602. Accordingly, an instance of the engineering object 608A is created in the engineering editor window 602.

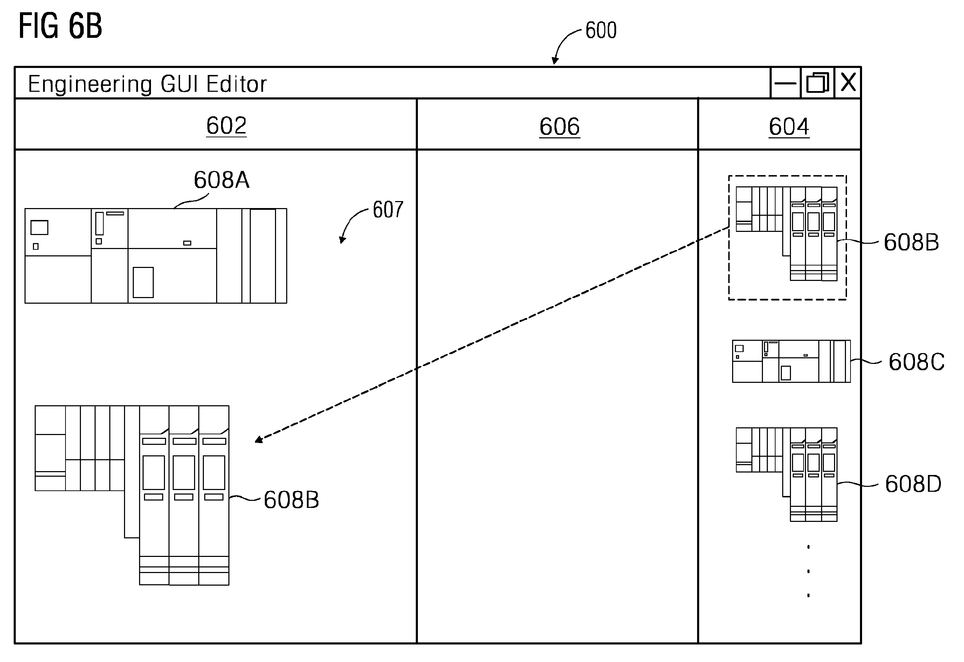

As depicted in FIG 6B, the user adds an engineering object 608B corresponding to an I/O device to the hardware configuration 607 being created in the engineering editor window 602 from the engineering object database window 604. Accordingly, an instance of the engineering object 608B is created in the engineering editor window 602. As soon as the instance of the engineering object 608B is created, the hardware configuration module 110 identifies hardware configurations which best match with the hardware configuration 607 being created from the hardware configuration database 116.

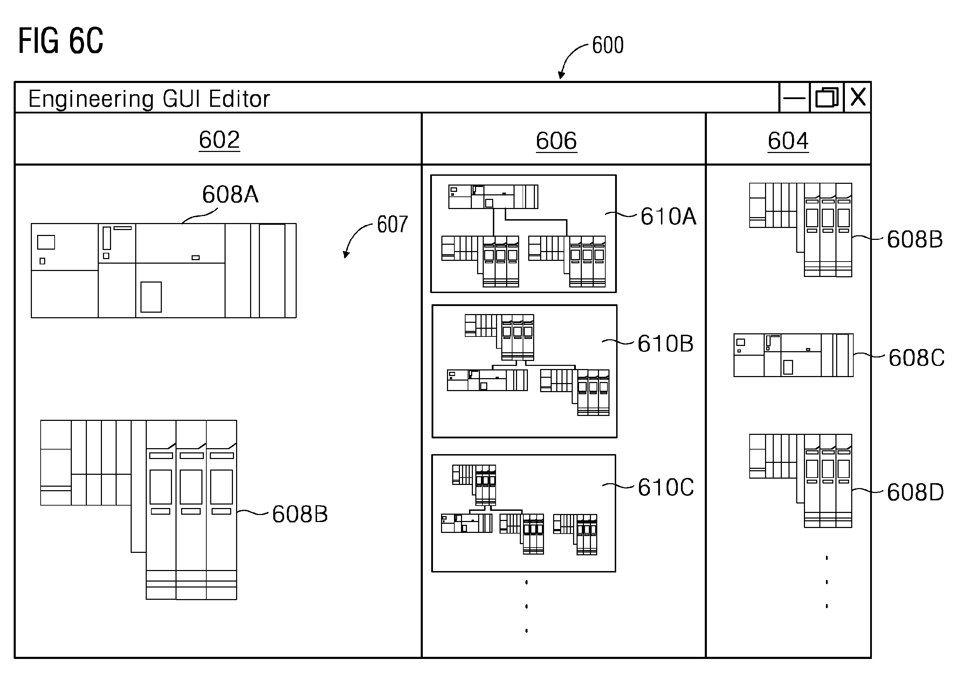

As depicted in FIG 6C, visual representation of the best matching hardware configurations 610A-N is displayed in the suggested configuration window 606. The visual representation is a thumbnail image of hardware configuration stored in memory. It is understood that visual representation of one best matching hardware configuration may differ from visual representation of another best matching configuration. The visual representation of the best matching hardware configurations 610A-N are displayed according to rank associated with the best matching hardware configurations. The rank is assigned based on usage of the best matching hardware configurations. The rank may be assigned based on usage by specific user. Alternatively, the rank may be assigned based on usage by all the users of the distributed control system 100. For example, the best matching configuration 610A is having highest rank among the best matching configurations 610A-N and hence the visual representation of the best matching configuration 610A is placed at the top. The arrangement of the visual representation according to the rank assist the user in selecting appropriate best matching configuration to create the desired hardware configuration 607. It can be seen from the visual representations of the best matching hardware configurations 610A-N that the best matching hardware configurations 610A-N comprises the engineering object 608A and the engineering object 610B in the hardware configuration being created. Hence, the best matching hardware configurations 610A-N are selected from the plurality of hardware configurations in the hardware configuration database 116.

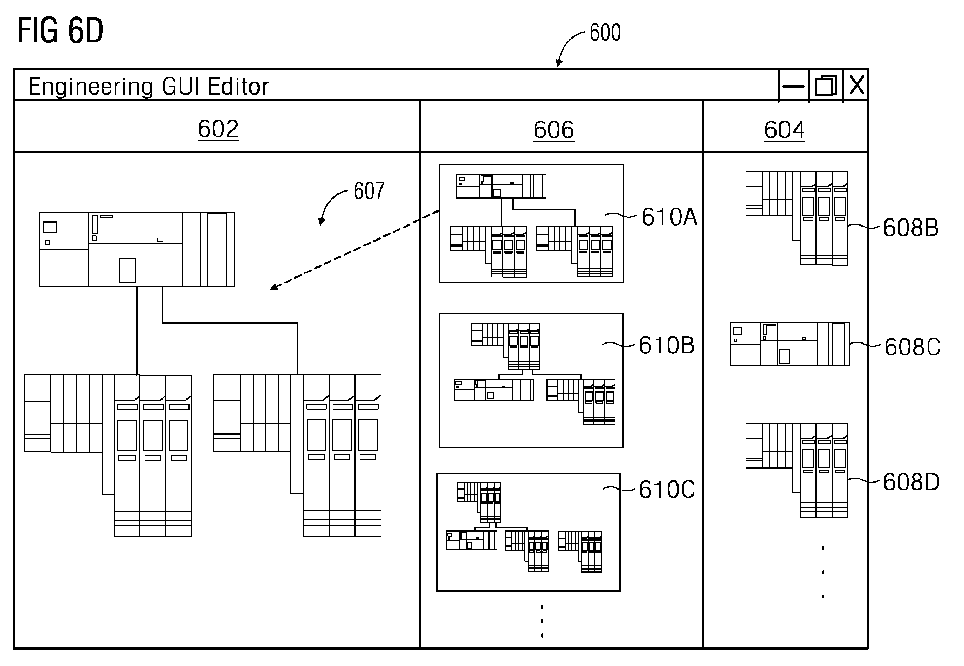

Now consider that, the user wishes to reuse the best matching configuration 610A, the user drags and drops the visual representation of the best matching hardware configuration 610A in the engineering editor window 602. Accordingly, the hardware configuration module 110 fetches the best matching hardware configuration 610A from the hardware configuration database 116 based on the drag and drop operation. Furthermore, the hardware configuration module 110 sends a best matching hardware configuration file containing the best matching hardware configuration 610A to a computing device displaying the instance of engineering GUI editor 600. As shown in FIG 6D, the best matching hardware configuration 610A received in the best matching hardware configuration file is displayed in the engineering editor window 602. If the best matching hardware configuration 610A requires modifications with respect to the desired hardware configuration, the user edits the best matching hardware configuration 610A to create the desired hardware configuration 607. Then, the user may compile the created hardware configuration 607 for downloading on to a main programmable logic controller in an industrial setting using the instance of engineering GUI editor 600. On the other hand, if the user do not wish to reuse any of the best matching configurations 610A-N recommended by the hardware configuration module 110, then the user adds another engineering object from the engineering object database window 604. Accordingly, the process described above is repeated till the desired hardware configuration 607 is created. Thus, time and effort required to create a desired hardware configuration manually is significantly reduced. Also, possibility of creating errorneous hardware configurations due to human errors is reduced.

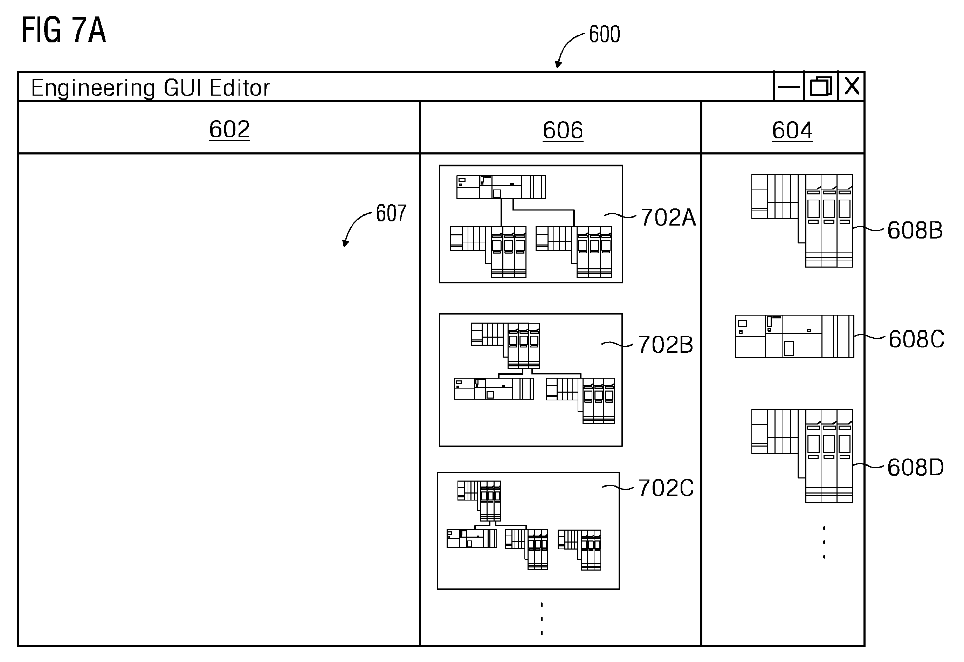

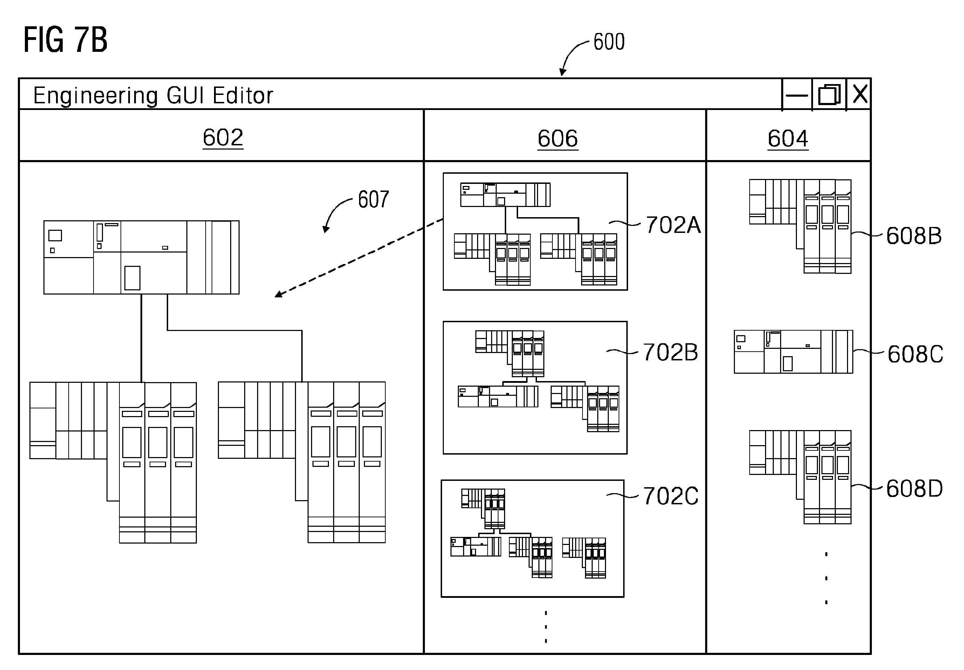

FIGs 7A and 7B are screenshot views of the instance of engineering GUI editor 600 illustrating the process of creating hardware configuration according to another embodiment of the present invention. When a user sends a request to access the engineering system 108 to the server 102 via a computing device 104A, the server 102 displays the instance of engineering GUI editor 600 on the computing device 104A. Accordingly, the hardware configuration module 110 identifies one or more hardware configurations 702A-N from the plurality of hardware configurations in the hardware configuration database 116 based on pre-defined criteria. The pre-defined criteria may include selection on hardware configurations 702A-N based on rank, frequent usage by a particular user, randomness, history, preference and so on. As shown in FIG 7A, the instance of the suggested configuration window 606 displays the identified hardware configurations 702A-N for creating a desired hardware configuration 607. It can be noted that the hardware configurations 702A-N are identified and displayed before selection of any engineering object from the engineering object database window 604 for use in the hardware configuration 607. Thus, the hardware configurations 702A-N are not selected based on best match criteria in this embodiment rather the hardware configurations 702A-N are recommended to the user for reuse based on the pre-defined criteria.

Although the embodiments of the present invention are described in detailed with respect to creating hardware configuration of hardware devices in an industrial automation system, one skilled in the art can understand the embodiments of the present invention can be equally applied to create hardware configurations of hardware devices in other automation systems such as building automation system, home automation system and the like.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method of dynamically creating hardware configurations in a distributed control system (100,500), comprising:
receiving, by a server (102), selection of an engineering object (608B) for use in a hardware configuration (607) being created from a computing device (104A) in the distributed control system (100,500), wherein the engineering object (608B) corresponds to a hardware device in an automation system;
dynamically determining one or more hardware configurations (610A-N) which best match the hardware configuration (607) being created from a plurality of hardware configurations in a hardware configuration database (116), wherein the plurality of hardware configurations are associated with mulitple users of the distributed control system (100,500); and
generating the hardware configuration (607) based on the one or more best matching hardware configurations (610A-N).

2. The method according to claim 1, further comprising:
displaying visual representation of the best matching hardware configurations (610A-N).

3. The method according to claim 2, further comprising:
receiving selection of one of the best matching hardware configurations (610A-N) using the visual representation of the best matching hardware configurations (610A-N);
obtaining the selected best matching hardware configuration (610A) from the hardware configuration database (116); and
displaying the selected best matching hardware configuration (610A) in an instance of engineering GUI editor (600) displayed on the computing device (104A).

4. The method according to claim 3, wherein generating the hardware configuration (607) based on the one or more best matching hardware configurations (610A-N) comprises:
generating the hardware configuration (607) by editing the displayed best matching hardware configuration (610A) using the instance of engineering GUI editor (600).

5. The method according to claim 1, wherein dynamically determining the best matching hardware configurations (610A-N) comprises:
comparing the hardware configuration (607) being created with the plurality of hardware configurations in the hardware configuration database (116); and
identifying one or more hardware configurations (610A-N) which best matches the hardware configuration (607) being created from the plurality of hardware configurations based on the outcome of comparison.

6. The method according to claim 3, further comprising:
updating a rank associated with the selected best matching hardware configuration (610A) in a rank database (118).

7. The method according to claim 3, further comprising:
bookmarking the selected best matching hardware configuration (610A).

8. The method according to claim 2, further comprising:
dynamically updating visual representation of the one or more best matching hardware configurations (610A-N) based on selection of the engineering object (608B).

9. The method according to claim 2 or 8, wherein displaying the visual representation of the best matching hardware configurations (610A-N) comprises:
displaying visual representation of the best matching hardware configurations (610A-N) according to ranks associated with the best matching hardware configurations (610A-N).

10. The method according to claim 1, further comprising:
identifying one or more hardware configurations (710A-N) from the plurality of hardware configurations based on pre-defined criteria; and
generating the hardware configuration (607) based on the one or more hardware configurations (710A-N).

11. A server (102) of a distributed control system (100,500), comprising:
a processor (202); and
a memory (204) coupled to the processor (202), wherein the memory (204) comprises an engineering system (108) comprising a hardware configuration module (110), wherein the hardware configuration module (110) is capable of:
receiving selection of an engineering object (608B) for use in a hardware configuration (607) being created from a computing device (104A) in the distributed control system (100,500), wherein the engineering object (608B) corresponds to a hardware device in an automation system;
dynamically determining one or more hardware configurations (610A-N) which best match the hardware configuration (607) being created from a plurality of hardware configurations in a hardware configuration database (116), wherein the plurality of hardware configurations are associated with mulitple users of the distributed control system (100,500); and
generating the hardware configuration (607) based on the one or more best matching hardware configurations (610A-N).

12. The server (102) according to claim 11, wherein the hardware configuration module (110) is capable of:
receiving selection of one of the best matching hardware configurations (610A-N);
obtaining the selected best matching hardware configuration (610A) from the hardware configuration database (116); and
displaying the selected best matching hardware configuration (610A) in an instance of engineering GUI editor (600) displayed on the computing device (104A).

13. The server (102) according to claim 12, wherein the hardware configuration module (110) is capable of generating the hardware configuration (607) by editing the displayed best matching hardware configuration (610A) using the instance of engineering GUI editor (600).

14. The server (102) according to claim 12, wherein the hardware configuration module (110) is capable of updating a rank associated with the selected best matching hardware configuration (610A) in a rank database (118).

15. A distributed control system (100,500) comprising:
a server (102); and
a plurality of computing devices (104A-N) communicatively coupled to the server (102) via a network (106), wherein the server (102) is configured for detecting selection of an engineering object (608B) for use in a hardware configuration (607) being created on the respective computing devices (104A-N), determining one or more hardware configurations (610A-N) which best matches with each of the hardware configurations (607) being created from a plurality of hardware configurations associated with multiple users, and generating the hardware configuration (607) based on the one or more best matching hardware configurations (610A-N).
